# DEMANDE DE BREVET EUROPEEN

(11) **EP 4 497 637 A1**
(43) Date de publication de la demande: **29.01.2025**
(21) Numéro de dépôt: 24187610.1
(22) Date de dépôt: 10.07.2024
(51) Int. Cl.: B60R 16/02

(54) **ARRANGEMENT POUR VÉHICULE AUTOMOBILE**

(30) Priorité: 25.07.2023 FR 2308000
(71) Demandeur: Ampere SAS, 92100 Boulogne-Billancourt (FR)
(72) Inventeur: BOUVET, Laurent, 78280 GUYANCOURT (FR); GHIRARDINI, Armand, 78280 GUYANCOURT (FR)
(74) Mandataire: Renault Group

(57) **Abrégé**

Arrangement (50) pour véhicule automobile (100), comprenant
- une pièce de fixation (1),
- une traverse (51) de renfort d'un tablier (53) d'un véhicule automobile (100),
- au moins un premier câblage (45, 46) destiné à relier une prise de charge (69) du véhicule automobile (100) à une batterie haute tension (61) du véhicule automobile (100),
caractérisé en ce que la pièce de fixation (1) est fixée à la traverse de renfort (51) et comprend une première zone de de fixation (115) pour l'au moins un câblage (45, 46).

## Description

L'invention concerne un arrangement comprenant un support de fixation pour câble ou tuyau d'un véhicule automobile. L'invention porte aussi sur un véhicule automobile comprenant un tel arrangement.

Les constructeurs automobiles développent des véhicules présentant un porte-à-faux réduit par rapport aux porte-à-faux des véhicules antérieurs.

De plus, pour réduire les coûts de développement, des plateformes de véhicules thermiques sont réutilisées pour produire des véhicules électriques ou hybrides.

Or, l'implantation de nouveaux composants (parmi lesquels, par exemple, une batterie haute tension et une prise de charge) dans une structure de véhicule préexistante présente des contraintes de disposition spatiale de ces nouveaux éléments. Les contraintes concernent non seulement l'espace disponible pour loger les nouveaux composants, mais aussi les trajets des nouveaux tuyaux et câbles requis pour ces composants. Ces contraintes sont de plus majorées lorsque la structure de véhicule préexistante présente un porte-à-faux réduit.

Le but de l'invention est de fournir une solution permettant d'implanter de nouveaux composants dans une structure de véhicule préexistante tout en prenant en compte les différentes contraintes précédemment identifiées. En particulier, l'invention permet de réaliser un dispositif qui soit simple et fiable, qui permette une fixation de tuyaux et câbles dans une zone donnée du véhicule automobile sans modifier la structure de véhicule préexistante.

A cet effet, l'invention porte sur un arrangement pour véhicule automobile, comprenant
- une pièce de fixation,
- une traverse de renfort d'un tablier d'un véhicule automobile,
- au moins un premier câblage destiné à relier une prise de charge du véhicule automobile à une batterie haute tension du véhicule automobile,
la pièce de fixation étant fixée à la traverse de renfort et comprenant une première zone de de fixation pour l'au moins un câblage.

Dans un mode de réalisation, l'arrangement comprend en outre un tuyau ou un deuxième câblage, le tuyau ou deuxième câblage étant distinct de l'au moins un premier câblage, et la pièce de fixation comprend au moins une deuxième zone de fixation pour le tuyau ou deuxième câblage.

La pièce de fixation peut comprendre
- une première partie comprenant la première zone de fixation, la première partie étant directement fixée à la traverse de renfort du tablier, et
- une deuxième partie fixée à la première partie, la deuxième partie comprenant la deuxième zone de fixation pour le tuyau ou le deuxième câblage, notamment le tuyau ou câblage donné étant un tuyau destiné à relier un moyen de chauffage sur eau du véhicule automobile à un radiateur d'un habitacle du véhicule automobile et/ou le tuyau ou le deuxième câblage étant un tuyau destiné à relier un circuit de refroidissement de la batterie haute tension au radiateur de l'habitacle du véhicule automobile.

La première partie peut comprendre un premier ensemble de moyens de fixation, notamment un trou carré et un téton, et la deuxième partie peut comprendre un deuxième ensemble de moyens de fixation, notamment un trou circulaire et une extrémité recourbée, collaborant avec le premier ensemble de moyens de fixation de sorte à empêcher un mouvement de rotation de la deuxième partie par rapport à la première partie.

Dans un mode de réalisation, l'arrangement peut comprendre :
- un premier et un deuxième tuyaux de liquide de frein destinés à relier respectivement un frein avant droit et un frein avant gauche du véhicule automobile à un système d'assistance au freinage du véhicule automobile,
- un troisième et un quatrième tuyaux de fluide caloporteur destinés à relier respectivement un moyen de chauffage sur eau du véhicule automobile et un circuit de refroidissement d'une batterie haute tension du véhicule automobile à un radiateur d'un habitacle du véhicule automobile,
- un premier et un deuxième câblages destiné à relier une prise de charge du véhicule automobile à la batterie haute tension,
- un troisième câblage destiné à relier la batterie haute tension à un calculateur de gestion de la batterie haute tension.

De plus, la pièce de fixation comprend des moyens de fixation pour chaque tuyau pris parmi les premier, deuxième, troisième et quatrième tuyaux et pour chaque câblage pris parmi les premier deuxième et troisième câblages.

L'invention porte en outre sur un ensemble comprenant un arrangement selon l'invention, l'ensemble comprenant en outre :
- une batterie haute tension,
- un circuit de refroidissement de la batterie haute tension,
- un calculateur de gestion de la batterie haute tension,
- un chauffage sur eau,
- un habitacle équipé d'un radiateur,
- un frein avant droit, un frein avant gauche, et un système d'assistance au freinage, et
- une prise de charge,

De plus,
- le premier et le deuxième tuyaux de liquide de frein de l'arrangement relient respectivement le frein avant droit et le frein avant gauche au système d'assistance au freinage du véhicule automobile,
- le troisième et le quatrième tuyaux de fluide caloporteur de l'arrangement relient respectivement le chauffage sur eau et le circuit de refroidissement de la batterie haute tension au radiateur de habitacle,
- le premier et un deuxième câblages relient la prise de charge à la batterie haute tension,
- le troisième câblage relie la batterie haute tension au calculateur de gestion de la batterie haute tension.

L'invention porte en outre sur un véhicule automobile comprenant un ensemble selon l'invention ou un arrangement selon l'invention.

L'invention porte également sur un procédé de montage d'un véhicule automobile comprenant un ensemble selon l'invention, comprenant
- une étape de fixation de la première partie de la pièce de fixation de l'arrangement de l'ensemble sur la traverse de renfort de l'arrangement de l'ensemble, puis
- une étape d'installation du système d'assistance au freinage de l'ensemble et de fixation des premier et deuxième tuyaux de liquide de frein de l'arrangement de l'ensemble sur la première partie de la pièce de fixation de l'arrangement de l'ensemble, puis
- une étape de fixation de la deuxième partie de la pièce de fixation de l'arrangement de l'ensemble sur la première partie de la pièce de fixation de l'arrangement de l'ensemble,
- une étape de fixation des troisième et quatrième tuyaux de l'arrangement de l'ensemble sur la deuxième partie de la pièce de fixation de l'arrangement de l'ensemble.

Dans un mode de réalisation, le procédé de montage d'un véhicule automobile comprend en outre une étape supplémentaire de fixation des premier, deuxième et troisième câblages de l'arrangement de l'ensemble sur la première partie de la pièce de fixation de l'arrangement de l'ensemble, l'étape supplémentaire précédant l'étape de fixation de la deuxième partie de la pièce de fixation de l'arrangement de l'ensemble, ou l'étape supplémentaire se déroulant après l'étape de fixation de la deuxième partie de la pièce de fixation de l'arrangement de l'ensemble.

Ces objets, caractéristiques et avantages de la présente invention seront exposés en détail dans la description suivante d'un mode de réalisation particulier fait à titre non-limitatif en relation avec les figures jointes parmi lesquelles :
La figure 1 représente schématiquement un véhicule automobile équipé d'un arrangement selon un mode de réalisation de l'invention.
La figure 2 définit un repère orthonormé direct d'un véhicule automobile équipé d'un arrangement selon l'invention.

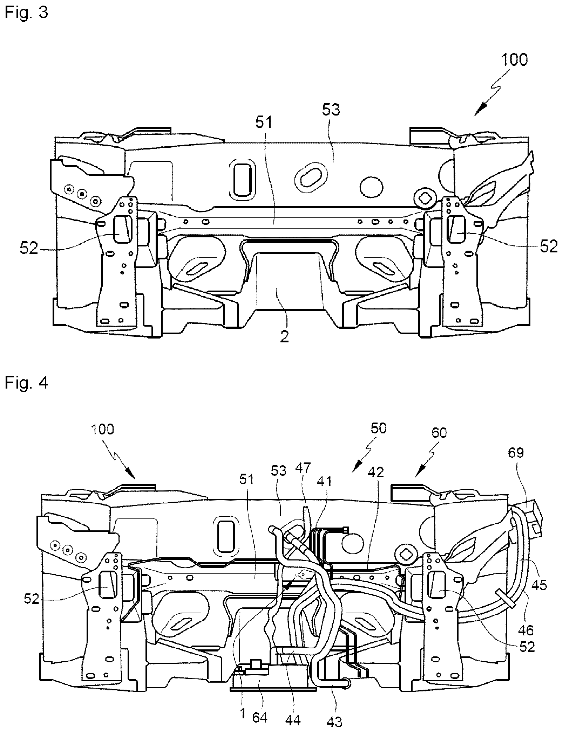

La figure 3 est une vue d'une traverse de renfort d'un véhicule automobile avant montage d'un arrangement selon l'invention.
La figure 4 est une vue d'une traverse de renfort d'un véhicule automobile après montage d'un arrangement selon l'invention.
La figure 5 est une vue détaillée d'une traverse de renfort d'un véhicule automobile après montage d'un arrangement selon l'invention.
La figure 6 est une première vue en perspective d'une première partie d'un support de fixation d'un arrangement selon un mode de réalisation de l'invention.
La figure 7 est une deuxième vue en perspective d'une première partie d'un support de fixation d'un arrangement selon un mode de réalisation de l'invention.
La figure 8 est une vue en perspective d'une deuxième partie d'un support de fixation d'un arrangement selon un mode de réalisation de l'invention.
La figure 9 est un ordinogramme d'un procédé de montage d'un arrangement selon l'invention.
La figure 10 est une première illustration d'une étape d'un procédé de montage d'un arrangement selon l'invention.
La figure 11 est une deuxième illustration d'une étape d'un procédé de montage d'un arrangement selon l'invention.
La figure 12 est une troisième illustration d'une étape d'un procédé de montage d'un arrangement selon l'invention.

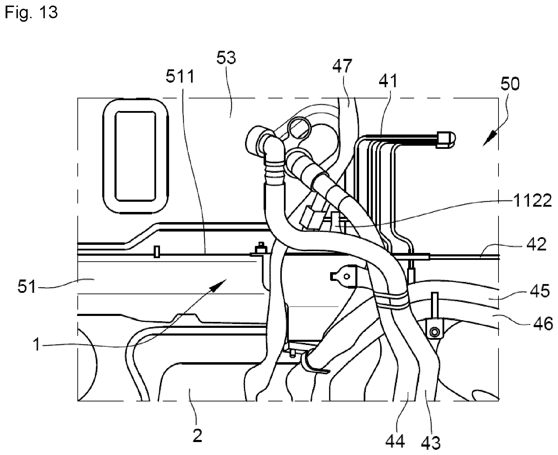

La figure 13 est une quatrième illustration d'une étape d'un procédé de montage d'un arrangement selon l'invention.

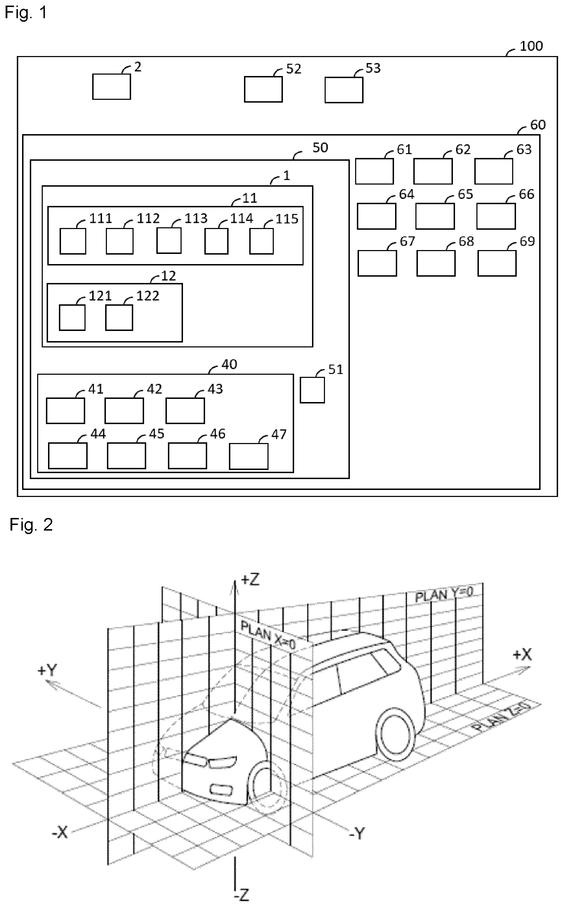

Un mode de réalisation d'un véhicule automobile 100 selon l'invention est décrit ci-après en référence à la figure 1. Le véhicule automobile 100 est un véhicule automobile de n'importe quel type, notamment un véhicule de tourisme ou un véhicule utilitaire.

Pour les besoins de la description, et en référence à la figure 2, on utilise un repère orthonormé direct R0, d'axes X,Y, Z, classiquement utilisé en conception automobile, dans lequel
- l'axe X désigne la direction longitudinale avant-arrière du véhicule, orienté vers l'arrière,
- l'axe Y désigne la direction transversale et est orienté vers la droite du véhicule, et
- l'axe Z désigne la direction verticale, et est orienté vers le haut.

Le véhicule automobile 100 comprend une chaine de traction électrique. Dans un mode de réalisation, le véhicule automobile 100 est un véhicule tout électrique. Alternativement, le véhicule automobile 100 pourrait être un véhicule hybride.

Dans un mode de réalisation, la structure de la plateforme utilisée pour construire le véhicule automobile 100 est reprise majoritairement d'une structure de véhicule thermique, nommée dans la suite du document CMFB-ICE. Notamment, les longerons, le tablier et la traverse de renfort tablier du véhicule automobile 100 selon l'invention sont identiques aux longerons, tablier et traverse de renfort tablier mis en oeuvre dans la plateforme CMFB-ICE.

Dans le mode de réalisation présenté dans la suite du document, la structure du véhicule automobile 100 ne subit pas de modification. En d'autres termes, la structure du véhicule automobile n'est pas modifiée par l'implantation de nouveaux tuyaux ou câblages et leur fixation en lien avec l'implantation d'une chaîne de traction électrique.

En revanche, une zone dite « zone tunnel », usuellement présente et utilisée sur les véhicules thermiques pour l'implantation de l'échappement et des organes de dépollution (qui n'équipent pas les véhicules tout électrique) a été modifiée. Avantageusement, les dimensions de la zone tunnel ont été réduites pour économiser de l'espace. La zone tunnel ainsi modifiée permet de loger un chauffage sur eau haute tension 64 transmettant de la chaleur à une eau traversant un radiateur 65 de l'habitacle du véhicule automobile 100. En d'autres termes, la présence du chauffage à eau 64 en zone tunnel est nécessaire pour fournir du chauffage dans la zone habitacle. En effet, contrairement à un véhicule qui aurait été conçu à partir d'une architecture de véhicule électrique, l'habitable d'un véhicule selon l'invention ne comprend pas de résistance thermique permettant de chauffer l'habitacle. La présence d'un chauffage sur eau 64 impose par ailleurs de reculer au maximum la position de la zone tunnel dans le véhicule, afin de réduire les risques induits par un choc qui viendrait endommager le chauffage sur eau 64.

Le raccordement du radiateur 65 de l'habitacle au chauffage sur eau 64 situé dans le compartiment moteur nécessite de mettre en place un passage de tuyaux d'eau entre la zone compartiment moteur et le tunnel 2.

De plus, dans le mode de réalisation décrit, la prise de charge du véhicule automobile 100 est implantée sur une aile avant du véhicule. De plus, la batterie haute tension 61 se trouve sous la caisse du véhicule et différentes interfaces de la batterie haute tension 61 vers d'autres composants du véhicule transitent par le tunnel 2 : des tuyaux d'eau 43, 44 reliant respectivement le chauffage sur eau 64 et le circuit de refroidissement de la batterie 62 au radiateur 65 de l'habitacle, un câblage 12 Volts reliant la batterie haute tension 61 du véhicule automobile 100 à un calculateur 63 de gestion de la batterie, et des câblages de connexion de la batterie 61 avec une prise de charge 69 circulant depuis la prise de charge 69 à travers le compartiment moteur puis descendant en zone tunnel vers la batterie haute tension 61.

Par ailleurs, un système d'assistance au freinage 68 est également disposé dans le compartiment moteur. Deux tuyaux rigides 41, 42 permettant d'actionner les freins arrière transitent par la zone moteur puis cheminent par la zone tunnel pour atteindre les roues arrière du véhicule. Les tuyaux de frein pour les roues avant parcourent aussi le compartiment moteur dans cette même zone.

Afin de ne pas créer de nouvelles interfaces sur les éléments repris de la plateforme CMFB-ICE, notamment sur les longerons 52, le tablier 53 et la traverse de renfort du tablier avant, le véhicule comprend un arrangement 50 comprenant une pièce de fixation 1, la pièce de fixation 1 permettant de fixer les câbles et tuyaux d'un ensemble d'équipements 60 du véhicule automobile 100.

L'invention porte sur un arrangement 50, comprenant :
- une pièce de fixation 1,
- une traverse 51 de renfort d'un tablier 53 d'un véhicule automobile 100,
- au moins un premier câblage 45, 46 destiné à relier une prise de charge 69 du véhicule automobile 100 à une batterie haute tension 61 du véhicule automobile 100,
la pièce de fixation 1 étant fixée à la traverse de tablier 51 et comprenant une première zone de de fixation 114 pour l'au moins un câblage 45, 46.

Dans un mode de réalisation, l'arrangement 50 comprend en outre un tuyau ou un deuxième câblage, le tuyau ou deuxième câblage donné 41, 42, 43, 44 étant distinct de l'au moins un premier câblage 45, 46, et la pièce de fixation 1 comprend au moins une deuxième zone de fixation pour le tuyau ou deuxième câblage 41, 42, 43, 44.

Le terme « zone de fixation » est utilisé pour désigner une portion de surface de la pièce de fixation 1 qui comprend un aménagement contribuant à fixer un tuyau ou câblage. L'aménagement peut être simplement une portion de surface servant d'appui, et/ou au moins un trou réalisé dans la portion de surface, et/ou un axe fileté et/ou un pion de centrage fixé à la portion de surface. D'autres modes de réalisation de la pièce de fixation, notamment de l'aménagement, sont également possibles.

Dans un mode de réalisation, le véhicule automobile 100 peut avantageusement comprendre un ensemble 60 comprenant les équipements suivants :
- une batterie haute tension 61,
- un circuit de refroidissement de la batterie 62,
- un calculateur de gestion de la batterie haute tension 63,
- un chauffage sur eau 64,
- un habitacle équipé d'un radiateur 65,
- un frein avant droit 66, un frein avant gauche 67, et un système d'assistance au freinage 68.

L'ensemble 60 comprend en outre un arrangement 50 comprenant les câblages et tuyaux suivants :
- un premier et un deuxième tuyaux de liquide de frein 41, 42 reliant respectivement un frein avant droit 66 et un frein avant gauche 67 du véhicule automobile 100 à un système d'assistance au freinage 68 du véhicule automobile 100,
- un troisième et un quatrième tuyaux de fluide caloporteur 43, 44 reliant respectivement un chauffage sur eau 64 du véhicule automobile 100 et un circuit de refroidissement 62 d'une batterie haute tension 61 du véhicule automobile 100 à un radiateur 65 d'un habitacle du véhicule automobile 100,
- un premier et un deuxième câblages 45, 46 reliant une prise de charge 69 du véhicule automobile 100 à la batterie haute tension 61,
- un troisième câblage 47 reliant la batterie haute tension 61 à un calculateur 63 de gestion de la batterie haute tension 61.

De plus, dans ce mode de réalisation, la pièce de fixation 1 comprend des moyens de fixation 1111, 1112, 1121, 1122, 1123, 1131, 1132, 1133, 1141, 1142, 1151, 1211, 1212, 1221, 1222 pour chaque tuyau pris parmi les premier, deuxième, troisième et quatrième tuyaux et pour chaque câblage pris parmi les premier deuxième et troisième câblages.

Le troisième câblage 47 permet au calculateur de gestion de la batterie 63 de récupérer des informations relatives à la batterie, par exemple le niveau de charge de la batterie 61.

Dans la suite du document, le terme « pièce de fixation » désigne une pièce destinée à agencer au moins un tuyau ou câblage dans une zone de fixation donnée d'un véhicule automobile. Avantageusement, une pièce de fixation simplifie le montage de l'au moins un tuyau ou câblage dans la zone donnée.

La « pièce de fixation 1 » ou « pièce 1 » est une pièce conçue pour
- d'une part être fixée à la traverse de renfort 51 du bouclier 53 avant du véhicule automobile 100, et
- d'autre part fournir des zones de fixation 111, 112, 113, 114, 115, 121, 122 pour des tuyaux et câblages, notamment pour les premier, deuxième, troisième et quatrième tuyaux, ainsi que les premier, deuxième et troisième câblages.

Dans un mode de réalisation préféré, la pièce de fixation 1 comprend :
- une première partie 11 comprenant une première zone de fixation 114, la première partie 11 étant directement fixée à la traverse 51 de renfort du tablier 53, et
- une deuxième partie 12 fixée à la traverse 51 de renfort du tablier 53 par l'intermédiaire de la première partie 11, la deuxième partie comprenant une deuxième zone de fixation 122 pour un tuyau ou câblage donné, notamment le tuyau ou câblage donné étant un tuyau de chauffage habitacle et/ou un tuyau de refroidissement de la batterie.

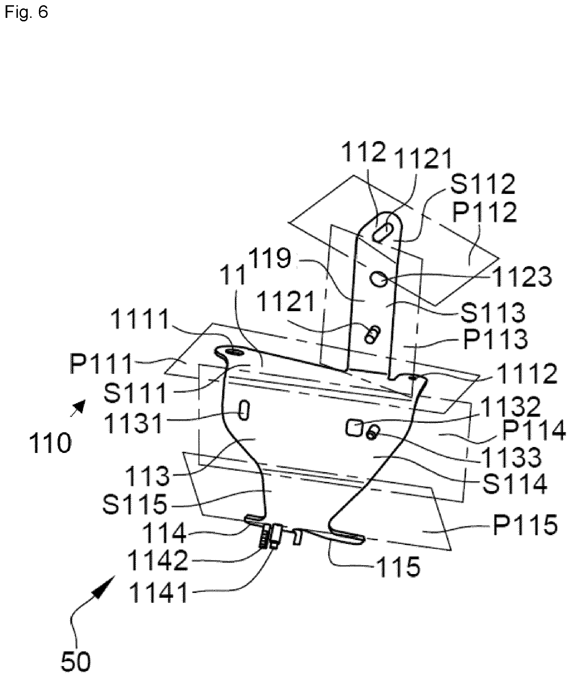

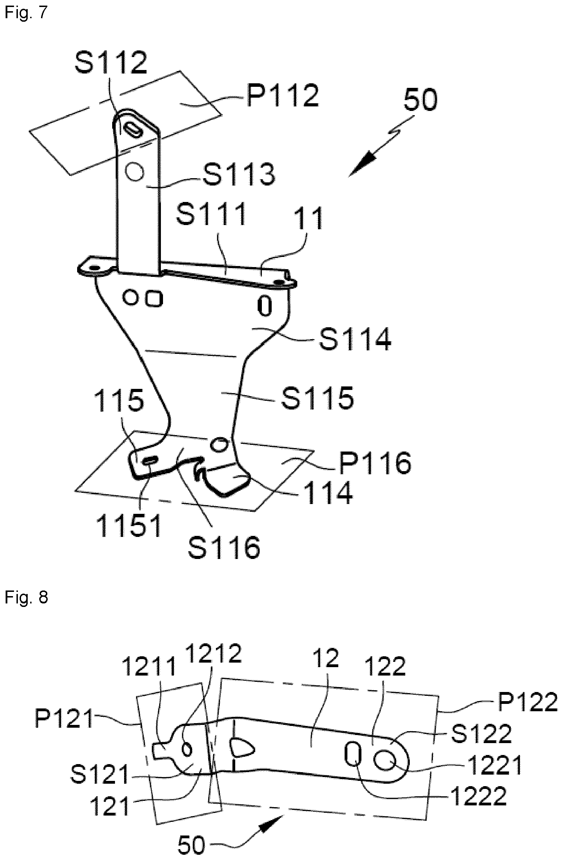

Dans le mode de réalisation décrit par les figures 6 à 8, la pièce de fixation 1 comprend
- une première partie 11, nommée également « partie principale 11 » comprenant six surfaces sensiblement planes S111, S112, S113, S114, S115, S116 situées respectivement dans six plans P111, P112, P113, P 114, P115 et P116, et
- une deuxième partie 12, nommée également « partie additionnelle 12 », comprenant principalement deux surfaces sensiblement planes S121, S122 situées respectivement dans deux plans P121 et P122. Dans un mode de réalisation, les plans P121 et P122 forment un angle obtus entre eux.

Dans un mode de réalisation, la pièce de fixation 1 est en tôle emboutie. Dans un mode de réalisation, au moins une surface S115 de la pièce de fixation comprend un embouti, c'est-à-dire une rainure, pour augmenter sa rigidité.

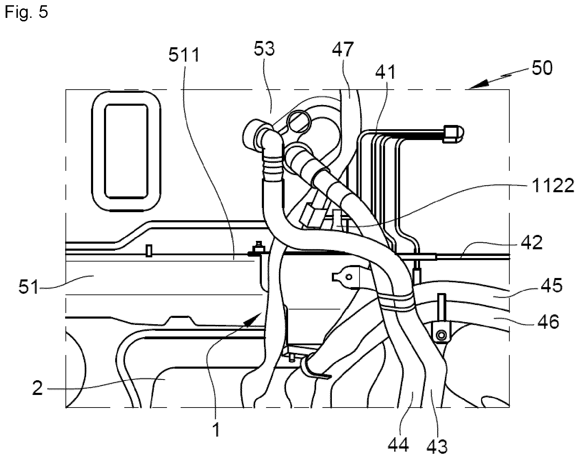

La pièce de fixation 1 est décrite en référence au repère (X, Y, Z) dans une configuration où elle est montée sur la traverse 51 du véhicule automobile 100. Dans cette configuration, une surface S111 de la partie principale 11 de la pièce de fixation 1 est en contact avec une face supérieure 511 de la traverse 51, la face supérieure 511 de la traverse 51 étant elle-même sensiblement parallèle à un plan (X, Y). Notamment, la surface S111 est posée sur la face supérieure 511 de la traverse 51. La présence de trous 1111, 1112 traversant la surface S111 permet de fixer la partie principale 11 de la pièce de fixation 1 à la traverse 51, notamment par des boulons comme cela est illustré par la figure 5. La surface S111 fournit donc une zone de fixation 110 de la pièce 1 à la traverse 51.

La fixation de la surface S111 détermine ainsi la position des autres surfaces S112 à S116 de la partie principale 11 de la pièce de fixation 1 dans le véhicule 100. De plus, comme cela sera décrit plus loin dans le document, la surface S121 de la partie additionnelle 12 est fixée à la surface S114 de la partie principale 11. La fixation de la surface S111 détermine ainsi la position des surfaces S121 et S122 de la partie additionnelle 12 de la pièce de fixation 1.

Dans le mode de réalisation décrit, les surfaces S112, S113, S114, S116, S121 et S122 ont pour fonction de fournir des zones de fixation, pour au moins un tuyau ou au moins un câblage du véhicule automobile 100, à la traverse 51 par l'intermédiaire de la pièce de fixation 1.

On décrit tout d'abord les zones de fixation pour tuyau ou câble fournies par les surfaces S112, S113, S114, S116 de la partie principale 11 de la pièce de fixation 1.

La surface S112 est définie selon un plan P112 parallèle à une première surface 531 du bouclier 53, la première surface 531 étant située en bordure d'un évidement du bouclier 53. La surface S112 est destinée à être placée en appui sur la première surface 531 du bouclier 53. Sur la surface S112 se trouve une première zone de fixation 112 pour tuyau ou câble, la zone de fixation 112 comprenant un moyen de fixation, notamment un trou oblong 1121.

Les plans P113 et P114, contenant les surfaces S113 et S114, sont sensiblement parallèles à un plan (Y, Z).

La surface S113, définie selon le plan P113, est une languette reliant la surface S112 à la surface S111. La surface S113 longe la surface du bouclier 53. La surface S113 comprend une deuxième zone de fixation 119 pour tuyau ou câble, contenant une tige filetée 1121 destinée à fixer le premier et le deuxième tuyau de liquide de frein 41, 42, par exemple, par l'intermédiaire d'un clip de fixation 1122. Le clip de fixation 1122 est plus particulièrement destiné à équiper un véhicule dont la colonne de direction est à gauche.

Dans un mode de réalisation, la deuxième zone de fixation 119 pour tuyau ou câble comprend en outre un trou rond 1123 destiné à fixer un ou plusieurs tuyaux de liquide de freins d'un véhicule dont la colonne de direction se situe à droite.

De même, la surface S114, définie selon le plan P114, est une large surface reliant la surface S111 à la surface S115. La surface S114 longe une face verticale de la traverse 51 de renfort de bouclier. La surface S114 comprend une troisième zone de fixation 113 pour tuyau ou câble, contenant un trou oblong 1131, un trou carré 1132 et un téton 1133. Le trou oblong 1131 est destiné à collaborer avec un moyen de fixation mâle pour fixer le troisième câblage 47 reliant la batterie haute tension 61 au calculateur de gestion de la batterie 63. Le trou carré 1132 et le téton 1133 sont destinés à collaborer avec des structures de la pièce additionnelle 12 pour sa fixation à la pièce principale 11, comme cela sera repris plus loin dans ce document.

La surface S115 prolonge la partie principale 11 en direction du tunnel 2 destiné à contenir le chauffage sur eau 64. La surface S115 comprend une rainure aussi appelée « embouti » pour la consolidation de la partie principale 11. La surface S115 ne comprend pas de zone de fixation. En revanche, la surface S115 relie la surface S116 à la surface S114. La forme de la surface S115, ses dimensions et le renforcement de sa structure, notamment par une rainure, permettent de disposer la surface S116 dans le tunnel 2.

La surface S115 est ainsi prolongée par la surface S116 qui s'étend à l'intérieur du tunnel 2. La surface S116 se divise en deux zones de fixation pour tuyau ou câble,
- une quatrième zone de fixation 114, comprenant un téton 1141 et une vis 1142 aptes à collaborer avec un moyen de fixation du premier et du deuxième câblages 45, 46 reliant la prise de charge à la batterie haute tension 61, et
- une cinquième zone de fixation 115 comprenant un trou oblong 1151 également apte à collaborer avec un moyen de fixation d'un autre câblage, par exemple un moyen de fixation d'un câblage haute tension de plus faible section. Dans la vue proposée le trou oblong 1151 n'est pas utilisé.

On décrit ensuite les zones de fixation fournies par les surfaces S121 et S122 de la partie additionnelle 12 de la pièce de fixation 1.

La surface S121 comprend une sixième zone de fixation 121, qui collabore avec la troisième zone de fixation 113 de la partie principale 11, notamment
- l'extrémité recourbée 1211 de la pièce additionnelle 12 collabore avec le trou carré 1132 de la pièce principale, et
- le trou rond 1212 de la pièce additionnelle 1212 collabore avec le téton 1133 de la pièce principale 11.

La surface S122 comprend une septième zone de fixation 122 comprenant un trou rond 1221 et trou de forme sensiblement oblongue 1222 destinés à collaborer avec un moyen de fixation mâle pour fixer tuyaux d'eau 43, 44 reliant respectivement le chauffage sur eau 64 et le circuit de refroidissement de la batterie 62 au radiateur 65 de l'habitacle.

L'invention porte en outre sur un procédé de montage d'un véhicule automobile comprenant
- une étape E1 de fixation de la première partie 11 de la pièce de fixation 1 sur la traverse de renfort 51, puis
- une étape E2 d'installation du système d'assistance au freinage et de fixation des premier et deuxième tuyaux de liquide de freins sur la première partie 11 de la pièce de fixation 1, puis
- une étape E4 de fixation de la deuxième partie 12 de la pièce de fixation 1 sur la première partie 11 de la pièce de fixation 1,
- une étape E5 de fixation des troisième et quatrième tuyaux 43, 44 sur la deuxième partie 12 de la pièce de fixation.

Le procédé de montage est décrit ci-après en référence aux figues 9 à 13.

Dans une étape E1 de fixation de la première partie 11 de la pièce de fixation 1 sur la traverse de renfort 51, la surface S111 de la partie principale 11 de la pièce de fixation 1 est placée en contact avec la face supérieure 511 de la traverse 51, la face supérieure 511 de la traverse 51 étant elle-même sensiblement parallèle à un plan (X, Y). Notamment, la surface S111 est posée sur la face supérieure 511 de la traverse 51.

Avantageusement, des boulons passant par la traverse et les trous 1111, 1112 traversant la surface S111 permettent de fixer la partie principale 11 de la pièce de fixation 1 à la traverse 51.

Puis dans une étape E2 d'installation du système d'assistance au freinage, on utilise avantageusement une table de préparation en amont du montage pour disposer les tuyaux rigides de liquide de frein selon une géométrie maîtrisée. En effet, la table de préparation permet un positionnement angulaire des tuyaux et une réalisation des serrages avec plus d'aisance que s'ils étaient réalisés dans le véhicule. Une fois les tuyaux rigides positionnés autour du système d'assistance au freinage, ce dernier est fixé sur le tablier 53 du véhicule automobile. Afin d'éviter des dispersions trop importantes dans le positionnement des tuyaux rigides de frein et ainsi de maitriser la géométrie de ces derniers, il est nécessaire d'implanter une fixation de tuyau de frein au minimum tous les 500 millimètres. A cet effet, la zone de fixation 112 de la partie principale fournit une surface de fixation pour chacun des tuyaux de liquide de frein 41, 42 relatifs aux freins avant gauche et droit.

En remarque, le système d'assistance au freinage est installé dans le véhicule par un mouvement de translation longitudinal pur, ce qui signifie que la partie additionnelle 12 de la pièce de fixation 1 doit impérativement être fixée à la partie principale 11 de la pièce de fixation 1 après que le système d'assistance au freinage a été fixé au tablier.

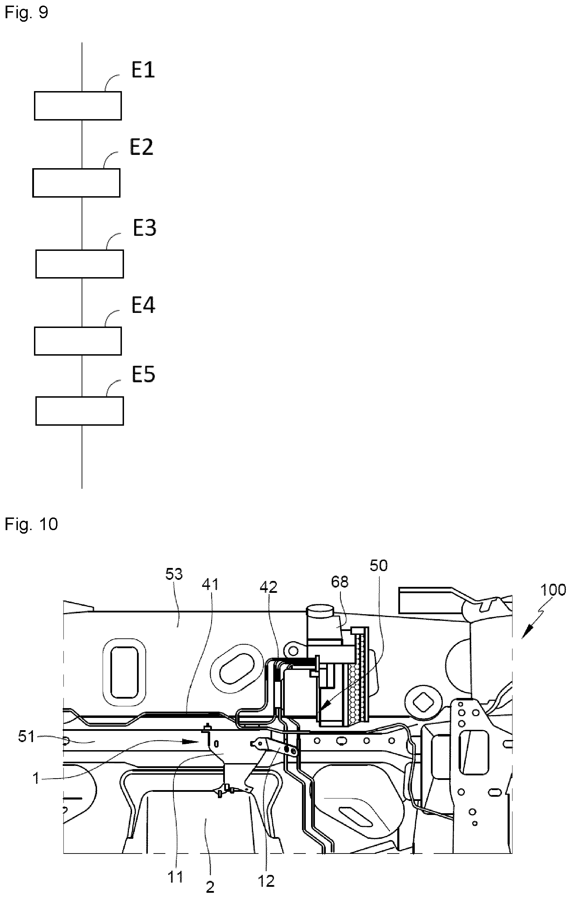

L'étape de fixation de la deuxième partie 12 de la pièce de fixation 1 sur la première partie 11 de la pièce de fixation 1 peut être réalisée directement après l'étape E2 d'installation du système d'assistance au freinage, comme cela est représenté notamment sur la figure 10. Alternativement, elle peut être précédée par une étape E3 de fixation des premier, deuxième et troisième câblages 45, 46, 47 sur la première partie 11 de la pièce de fixation 1.

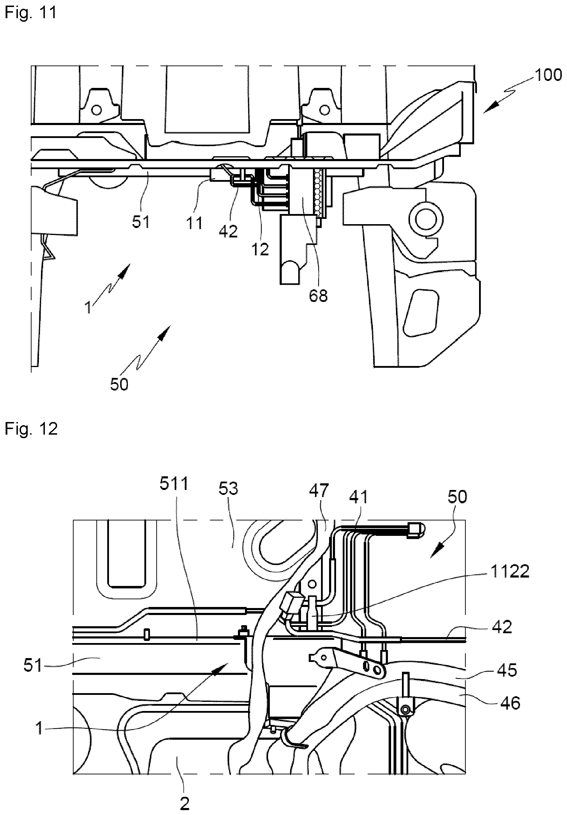

Dans l'étape E3, illustrée par la figure 12, les premiers et deuxième câblages 45, 46, qui correspondant aux câblages de la prise de charge, sont fixés aux zones de fixation 114 et 115 de la première partie. De plus le troisième câblage 47, correspondant au câblage reliant la batterie au calculateur 63 de gestion de la batterie, est fixé à la première zone 111 de la pièce principale 11.

Tant que le véhicule est disposé à une hauteur requise pour l'assemblage des éléments du compartiment moteur, les points suivants du parcours des câblages 45, 46, 47 ne sont pas accessibles au vissage par un opérateur dans l'usine d'assemblage. Ce qui signifie que les points de fixation des câblages 45, 46, 47 sur la pièce de fixation 1 sont les seuls points de fixation de ces câblages pendant plusieurs étapes de montage du véhicule.

Il est ainsi nécessaire que la pièce de fixation 1, notamment les zones de fixation 111, 114 et 115, présente des caractéristiques de résistance lui permettant de supporter le poids de longues portions de câblages. En particulier, la zone de fixation 111 doit permettre de supporter le poids d'une longueur de câblage s'étendant de la zone de fixation 111 jusqu'à la batterie. De plus, les zones de fixation 114 et 115 doivent permettre ensemble de supporter le poids d'une longueur des câblages 45, 46 s'étendant des zones de fixation 114, 115 jusqu'à la batterie.

Puis dans une étape E4, précédant ou suivant l'étape E3, la partie additionnelle 12 de la pièce de fixation est fixée à la partie principale de la pièce de fixation. Pour cela,
- le trou rond 1212 de la pièce additionnelle 12 collabore avec le téton 1133 de la pièce principale 11, pour guider la pièce additionnelle notamment selon un degré de liberté autour de l'axe du téton 1133. Et
- l'extrémité recourbée 1211 de la pièce additionnelle 12 collabore avec le trou carré 1132 de la pièce principale, pour empêcher le mouvement de rotation de la pièce additionnelle 12 autour du téton 1133 de la pièce principale 11.

Puis dans une étape E5 on fixe les troisième et quatrième tuyaux 43, 44 sur la deuxième partie 12 de la pièce de fixation 1. Pour cela, la zone de fixation 122 comprend un trou rond un 1221 et trou de forme sensiblement oblongue 1222 destinés à collaborer avec un moyen de fixation mâle pour fixer troisième et quatrième tuyaux 43, 44.

Finalement, l'arrangement selon l'invention, et notamment la pièce de fixation 1, permettent d'implanter de nouveaux composants dans une structure de véhicule existante. En particulier l'arrangement selon l'invention permet de développer un véhicule électrique sur la base d'une structure de véhicule thermique existante, sans qu'il soit nécessaire de modifier ni la structure existante, ni les outillages nécessaires au montage du véhicule

De plus, en disposant la pièce de fixation sur la traverse de renfort tablier, on s'assure que l'arrangement est suffisamment robuste pour soutenir le poids des tuyaux et câblages supportés par la pièce de fixation. Ce point est particulièrement important pendant le montage du véhicule, lorsque la pièce de fixation doit supporter temporairement une longueur importante de câblages.

## Revendications

1. Arrangement (50) pour véhicule automobile (100), comprenant
- une pièce de fixation (1),
- une traverse (51) de renfort d'un tablier (53) d'un véhicule automobile (100),
- au moins un premier câblage (45, 46) destiné à relier une prise de charge (69) du véhicule automobile (100) à une batterie haute tension (61) du véhicule automobile (100),
**caractérisé en ce que** la pièce de fixation (1) est fixée à la traverse de renfort (51) et comprend une première zone de de fixation (114) pour l'au moins un câblage (45, 46).

2. Arrangement (50) selon la revendication précédente, **caractérisé en ce qu'**il comprend en outre un tuyau ou un deuxième câblage, le tuyau ou deuxième câblage (41, 42, 43, 44) étant distinct de l'au moins un premier câblage,
et en ce la pièce de fixation (1) comprend au moins une deuxième zone de fixation pour le tuyau ou deuxième câblage (41, 42, 43, 44).

3. Arrangement (50) selon la revendication précédente, **caractérisé en ce que** la pièce de fixation (1) comprend
- une première partie (11) comprenant la première zone de fixation (114), la première partie (11) étant directement fixée à la traverse (51) de renfort du tablier (53), et
- une deuxième partie (12) fixée à la première partie (11), la deuxième partie (12) comprenant la deuxième zone de fixation (122) pour le tuyau ou le deuxième câblage (43, 44), notamment le tuyau ou câblage donné étant un tuyau (43) destiné à relier un moyen de chauffage sur eau (64) du véhicule automobile (100) à un radiateur (65) d'un habitacle du véhicule automobile (100) et/ou le tuyau ou le deuxième câblage étant un tuyau (44) destiné à relier un circuit de refroidissement de la batterie haute tension (61) au radiateur (65) de l'habitacle du véhicule automobile (100).

4. Arrangement (50) selon la revendication précédente, **caractérisé en ce que** la première partie (11) comprend un premier ensemble de moyens de fixation, notamment un trou carré (1132) et un téton (1133), et **en ce que** la deuxième partie (12) comprend un deuxième ensemble de moyens de fixation, notamment un trou circulaire (1212) et une extrémité recourbée (1211), collaborant avec le premier ensemble de moyens de fixation de sorte à empêcher un mouvement de rotation de la deuxième partie (12) par rapport à la première partie (11).

5. Arrangement (50) selon l'une des revendications précédentes, **caractérisé en ce qu'**il comprend :
- un premier et un deuxième tuyaux de liquide de frein (41, 42) destinés à relier respectivement un frein avant droit (66) et un frein avant gauche (67) du véhicule automobile (100) à un système d'assistance au freinage (68) du véhicule automobile (100),
- un troisième et un quatrième tuyaux de fluide caloporteur (43, 44) destinés à relier respectivement un moyen de chauffage sur eau (64) du véhicule automobile (100) et un circuit de refroidissement (62) d'une batterie haute tension (61) du véhicule automobile (100) à un radiateur (65) d'un habitacle du véhicule automobile (100),
- un premier et un deuxième câblages (45, 46) destiné à relier une prise de charge (69) du véhicule automobile (100) à la batterie haute tension (61),
- un troisième câblage (47) destiné à relier la batterie haute tension (61) à un calculateur (63) de gestion de la batterie haute tension (61),
et **en ce que** la pièce de fixation (1) comprend des moyens de fixation (1111, 1112, 1121, 1122, 1123, 1131, 1132, 1133, 1141, 1142, 1151, 1211, 1212, 1221, 1222) pour chaque tuyau pris parmi les premier, deuxième, troisième et quatrième tuyaux et pour chaque câblage pris parmi les premier deuxième et troisième câblages.

6. Ensemble (60) comprenant un arrangement (50) selon la revendication précédente, l'ensemble comprenant en outre :
- une batterie haute tension (61),
- un circuit (62) de refroidissement de la batterie haute tension (61),
- un calculateur (63) de gestion de la batterie haute tension (61),
- un chauffage sur eau (64),
- un habitacle équipé d'un radiateur (65),
- un frein avant droit (66), un frein avant gauche (67), et un système d'assistance au freinage (68), et
- une prise de charge (69),
**caractérisé en ce que** .
- le premier et le deuxième tuyaux de liquide de frein (41, 42) de l'arrangement (50) relient respectivement le frein avant droit (66) et le frein avant gauche (67) au système d'assistance au freinage (68) du véhicule automobile (100),
- le troisième et le quatrième tuyaux de fluide caloporteur (43, 44) de l'arrangement (50) relient respectivement le chauffage sur eau (64) et le circuit de refroidissement (62) de la batterie haute tension (61) au radiateur (65) de habitacle,
- le premier et un deuxième câblages (45, 46) relient la prise de charge (69) à la batterie haute tension (61),
- le troisième câblage (47) relie la batterie haute tension (61) au calculateur (63) de gestion de la batterie haute tension (61).

7. Véhicule automobile comprenant un ensemble (60) selon la revendication précédente ou un arrangement (50) selon l'une des revendications 1 à 5.

8. Procédé de montage d'un véhicule automobile comprenant un ensemble (60) selon la revendication 6, **caractérisé en ce qu'**il comprend
- une étape (E1) de fixation de la première partie (11) de la pièce de fixation (1) de l'arrangement (50) de l'ensemble (60) sur la traverse de renfort (51) de l'arrangement (50) de l'ensemble (60), puis
- une étape (E2) d'installation du système d'assistance au freinage de l'ensemble (60) et de fixation des premier et deuxième tuyaux de liquide de frein (41, 42) de l'arrangement (50) de l'ensemble (60) sur la première partie (11) de la pièce de fixation (1) de l'arrangement (50) de l'ensemble (60), puis
- une étape (E4) de fixation de la deuxième partie (12) de la pièce de fixation (1) de l'arrangement (50) de l'ensemble (60) sur la première partie (11) de la pièce de fixation (1) de l'arrangement (50) de l'ensemble (60),
- une étape (E5) de fixation des troisième et quatrième tuyaux (43, 44) de l'arrangement (50) de l'ensemble (60) sur la deuxième partie (12) de la pièce de fixation de l'arrangement (50) de l'ensemble (60).

9. Procédé de montage d'un véhicule automobile selon la revendication précédente, **caractérisé en ce qu'**il comprend en outre une étape supplémentaire (E3) de fixation des premier, deuxième et troisième câblages (45, 46, 47) de l'arrangement (50) de l'ensemble (60) sur la première partie (11) de la pièce de fixation (1) de l'arrangement (50) de l'ensemble (60), l'étape supplémentaire (E3) précédant l'étape de fixation de la deuxième partie (12) de la pièce de fixation (1) de l'arrangement (50) de l'ensemble (60), ou l'étape supplémentaire (E3) se déroulant après l'étape de fixation de la deuxième partie (12) de la pièce de fixation (1) de l'arrangement (50) de l'ensemble (60).
